# EUROPEAN PATENT APPLICATION

(11) **EP 2 090 486 A1**
(43) Date of publication of application: **19.08.2009**
(21) Application number: 07792781.2
(22) Date of filing: 21.08.2007
(51) Int. Cl.: B60W 10/08, B60K 6/22, B60K 6/445, B60K 6/448, B60K 6/52, B60K 35/00, B60W 10/26, B60W 20/00

(54) **HYBRID VEHICLE AND MOTOR TRAVELABLE RANGE DISPLAY METHOD**

(30) Priority: 10.11.2006 JP 2006305030
(71) Applicant: Toyota Jidosha Kabushiki Kaisha, Toyota-shi, Aichi 471-8571 (JP)
(72) Inventor: ANDO, Ikuo, Toyota-shi Aichi 4718571 (JP)
(74) Representative: TBK-Patent
(86) International application number: PCT/JP2007/066169
(87) International publication number: WO 2008/056475

(57) **Abstract**

When the EV switch is on, a first motor drive continuable time T1 is calculated based on the state of charge (SOC) of the battery and the unit time driving power Pt (S110), and a second motor drive continuable time T2 is calculated as a time until reaching a lower limit temperature θref allowing the catalyst of the purifying device to function (S120), and whichever is shorter, is visibly displayed to a driver (S130, S140). This allows the range capable of continuing motor drive to be displayed more appropriately to the driver than a method of displaying the time simply by the state of charge (SOC) of the battery, and can reduce an uncomfortable feeling of the driver due to an unexpected start of the engine.

## Description

### Technical Field

The present invention relates to a hybrid vehicle and a motor drive continuable range displaying method, and more particularly to, a hybrid vehicle and a motor drive continuable range displaying method for displaying to a driver in a visible manner a range allowing the hybrid vehicle to continue a motor drive.

### Background Art

Conventionally, as this kind of hybrid vehicle, there has been proposed a hybrid vehicle which uses power from an engine to generate electric power to charge a battery as well as uses electric power from the battery to output driving power from a motor and which displays vehicle's drivable time and distance to a driver (for example, see Patent Document 1). According to the vehicle, the amount of dischargeable electric power based on the state of charge (SOC) of the battery is added to the amount of generatable electric power based on the remaining amount of fuel to obtain the total amount of electric power, which is then divided by the power consumption per unit time or per unit drive distance during a predetermined past period so as to calculate and display the drivable time and distance.
Patent Document 1: Japanese Patent No. 3614341

### Disclosure of the Invention

However, the above described hybrid vehicle displays a drivable range with an intermittent operation of the engine, but does not display a motor drive continuable range in a state of operation stop of the engine. As a method for displaying the motor drive continuable range, there can be considered a method for displaying a range depending on the state of charge (SOC) of the battery. As the condition for starting the engine during motor drive, there are various conditions such as a necessity of using the engine as a heat source. For a hybrid vehicle having a switch instructing motor drive, the driver may feel uncomfortable when the engine starts earlier than the range displayed depending on the state of charge (SOC) of the battery during motor drive in response to the driver's instruction.

An object of the hybrid vehicle and the motor drive continuable range displaying method in accordance with the present invention is to display more accurately to a driver a range allowing the hybrid vehicle to continue a motor drive. Another object of the hybrid vehicle and the motor drive continuable range displaying method in accordance with the present invention is to reduce an uncomfortable feeling of a driver due to an unexpected start of the internal combustion engine during the motor drive in response to a motor drive instruction.

The present invention accomplishes at least part of the demands mentioned above and the other relevant demands by the following configurations applied to the hybrid vehicle and the motor drive continuable range displaying method.

According to one aspect, the invention is directed to a hybrid vehicle driven with power from a motor and power from an internal combustion engine equipped with an exhaust gas purifying device having an exhaust gas purifying catalyst for purifying an exhaust gas. The hybrid vehicle includes: an accumulator that transfers electric power to and from the motor; a motor drive instructing switch to make an instruction for a motor drive in which the hybrid vehicle is driven with only by power from the motor in a state of operation stop of the internal combustion engine; and a motor drive continuable range displaying module that displays, to a driver in a visible manner, narrower one of a first motor drive continuable range and a second motor drive continuable range, when the instruction for the motor drive is made by the motor drive instructing switch. The first motor drive continuable range allows the hybrid vehicle to continue the motor drive and is defined in accordance with a driving state of the hybrid vehicle including at least a state of the accumulator during the motor drive. The second motor drive continuable range allows the hybrid vehicle to continue the motor drive and is defined in accordance with a state of the exhaust gas purifying catalyst.

In the hybrid vehicle according to this aspect of the invention, the motor drive continuable range displaying module displays, to a driver in a visible manner, narrower one of a first motor drive continuable range and a second motor drive continuable range, when the instruction for the motor drive is made by the motor drive instructing switch to make an instruction for a motor drive in which the hybrid vehicle is driven with only by power from the motor in a state of operation stop of the internal combustion engine. The first motor drive continuable range allows the hybrid vehicle to continue the motor drive and is defined in accordance with a driving state of the hybrid vehicle including at least a state of the accumulator during the motor drive. The second motor drive continuable range allows the hybrid vehicle to continue the motor drive and is defined in accordance with a state of the exhaust gas purifying catalyst. Displaying narrower one of the first motor drive continuable range and the second motor drive continuable range ensures to display more accurately to a driver a range allowing the hybrid vehicle to continue a motor drive. This arrangement effectively reduces an uncomfortable feeling of a driver due to an unexpected start of the internal combustion engine during motor drive in response to the motor drive instruction.

In one preferable application of the hybrid vehicle according to the above aspect of the invention, the first motor drive continuable range and the second motor drive continuable range are defined by either as a time allowing the hybrid vehicle to continue the motor drive or as a driving distance allowing the hybrid vehicle to continue the motor drive. This arrangement desirably allows a time or a driving distance allowing the hybrid vehicle to continue the motor drive to be displayed to the driver.

In another preferable application of the hybrid vehicle according to the above aspect of the invention, the first motor drive continuable range is calculated from an amount of electric power dischargeable from the accumulator and a driving power per unit time or per unit distance based on the driving state of the hybrid vehicle according to a driver's driving state, and the second motor drive continuable range is calculated from a time until reaching a temperature in the vicinity of a lower limit allowing the exhaust gas purifying catalyst to function. This arrangement desirably allows the first and second motor drive continuable ranges to be more appropriately calculated.

According to another aspect, the invention is also directed to a motor drive continuable range displaying method for displaying to a driver in a visible manner a range allowing a hybrid vehicle to continue a motor drive. The hybrid vehicle includes: an internal combustion engine outputting driving power and equipped with an exhaust gas purifying device having an exhaust gas purifying catalyst for purifying an exhaust gas; a motor outputting driving power; an accumulator that transfers electric power to and from the motor; and a motor drive instructing switch to make an instruction for the motor drive in which the hybrid vehicle is driven with only by power from the motor in a state of operation stop of the internal combustion engine. The method displays narrower one of a first motor drive continuable range and a second motor drive continuable range, when the instruction for the motor drive is made by the motor drive instructing switch. The first motor drive continuable range allows the hybrid vehicle to continue the motor drive and is defined in accordance with a driving state of the hybrid vehicle including at least a state of the accumulator during the motor drive. The second motor drive continuable range allows the hybrid vehicle to continue the motor drive and is defined in accordance with a state of the exhaust gas purifying catalyst.

According to this aspect of the invention, the motor drive continuable range displaying method displays to a driver in a visible manner narrower one of a first motor drive continuable range and a second motor drive continuable range, when the instruction for the motor drive is made by the motor drive instructing switch to make an instruction for a motor drive in which the hybrid vehicle is driven with only by power from the motor in a state of operation stop of the internal combustion engine. The first motor drive continuable range allows the hybrid vehicle to continue the motor drive and is defined in accordance with a driving state of the hybrid vehicle including at least a state of the accumulator during the motor drive. The second motor drive continuable range allows the hybrid vehicle to continue the motor drive and is defined in accordance with a state of the exhaust gas purifying catalyst. Displaying narrower one of the first motor drive continuable range and the second motor drive continuable range ensures to display more accurately to a driver a range allowing the hybrid vehicle to continue a motor drive. This arrangement effectively reduces an uncomfortable feeling of a driver due to an unexpected start of the internal combustion engine during motor drive in response to the motor drive instruction.

In the motor drive continuable range displaying method according to the above aspect of the invention, the first motor drive continuable range and the second motor drive continuable range may be defined by either as a time allowing the hybrid vehicle to continue the motor drive or as a driving distance allowing the hybrid vehicle to continue the motor drive. This arrangement desirably allows a time or a driving distance allowing the hybrid vehicle to continue the motor drive to be displayed to the driver.

In the motor drive continuable range displaying method according to the above aspect of the invention, the first motor drive continuable range may be calculated from an amount of electric power dischargeable from the accumulator and a driving power per unit time or per unit distance based on the driving state of the hybrid vehicle according to a driver's driving state. The second motor drive continuable range may be calculated from a time until reaching a temperature in the vicinity of a lower limit allowing the exhaust gas purifying catalyst to function. This arrangement desirably allows the first and second motor drive continuable ranges to be more appropriately calculated.

### Brief Description of the Drawings

Fig. 1 is a block diagram schematically showing a configuration of a hybrid vehicle 20 of an embodiment of the present invention;
Fig. 2 is a flowchart showing an example of display control routine executed by the hybrid electronic control unit 50 of the embodiment;
Fig. 3 is an explanatory drawing showing an example of a unit time decreasing catalyst temperature setting map;
Fig. 4 is a block diagram schematically showing a configuration of a hybrid vehicle 20B of a variation of the embodiment; and
Fig. 5 is a block diagram schematically showing a configuration of a hybrid vehicle 20C of a variation of the embodiment.

### Best Mode for Carrying Out the Invention

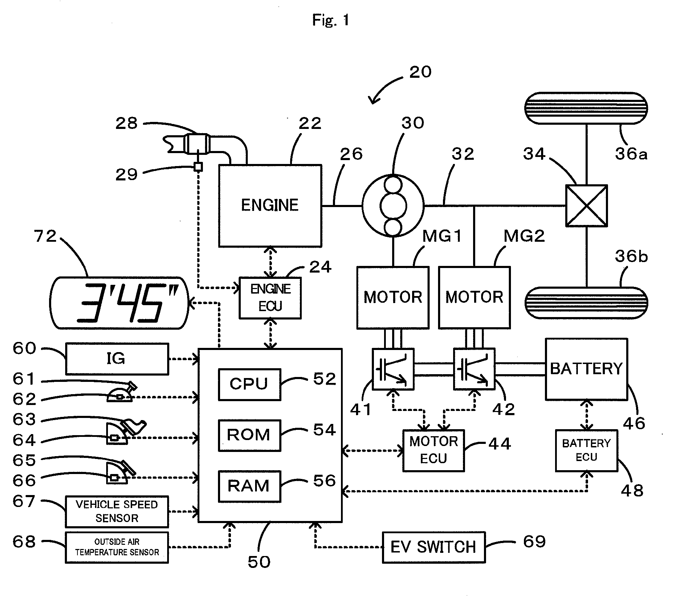

Hereinafter, the best mode for carrying out the invention will be described with reference to embodiments. Fig. 1 is a block diagram schematically showing a configuration of a hybrid vehicle 20 as an embodiment of the present invention. As shown in the figure, the hybrid vehicle 20 of the embodiment includes an engine 22 equipped with a purifying device 28 having a catalyst (e.g., a three-way catalyst) for purifying harmful components such as carbon monoxide (CO), hydrocarbon (HC), and nitrogen oxide (NOx) in an exhaust system configured as an internal combustion engine which outputs power using hydrocarbon fuels such as gasoline or gas oil; a planetary gear 30 which performs a differential operation using three rotational elements including a carrier and a ring gear connected to a crankshaft 26 of the engine 22 and a drive shaft 32 connected to drive wheels 36a and 36b via a differential gear 34 respectively; a motor MG1 configured as a synchronous motor generator whose rotor is connected to a sun gear as a remaining rotational element of the planetary gear 30; a motor MG2 configured as a synchronous motor generator whose rotor is connected to the drive shaft 32; a battery 46 connected to the motors MG1 and MG2 via inverters 41 and 42; and a hybrid electronic control unit 50 for controlling the entire vehicle.

The engine 22 receives controls such as a fuel injection control and an ignition control from an engine electronic control unit (hereinafter referred to as an engine ECU) 24 which inputs signals necessary for operation control of the engine 22 such as a catalyst bed temperature θcat from a catalyst temperature sensor 29 which detects a catalyst temperature of the purifying device 28. The motors MG1 and MG2 are driven under switching control of inverters 41 and 42 by a motor electronic control unit (hereinafter referred to as a motor ECU) 44 which inputs signals necessary for drive and control such as signals from a rotational position detection sensor (not shown) which detects a rotational position of a rotor of each motor. The battery 46 is managed by a battery electronic control unit (hereinafter referred to as a battery ECU) 48 which inputs signals necessary for management of a charge-discharge current from a current sensor (not shown) attached to a power line from the battery 46 and calculates the state of charge (SOC) based on an integrated value of the charge-discharge current.

The hybrid electronic control unit 50 is configured as a microprocessor around a CPU 52, and in addition to the CPU 52, includes a ROM 54 for storing a processing program; a RAM 56 for temporarily storing data; an input/output port (not shown); and a communication port (not shown). The hybrid electronic control unit 50 receives input signals via the input port such as an ignition signal from an ignition switch 60; a shift position SP from a shift position sensor 62 for detecting an operation position of a shift lever 61; an accelerator opening Acc from an accelerator pedal position sensor 64 for detecting the amount of depression of an accelerator pedal 63; a brake pedal position BP from a brake pedal position sensor 66 for detecting the amount of depression of a brake pedal 65; a vehicle speed V from a vehicle speed sensor 67; an outside air temperature θout from an outside air temperature sensor 68 for detecting the temperature around the vehicle; and an on/off signal from an EV switch 69 for instructing a motor drive using only the power from the motor MG2 in a state of operation stop of the engine 22. The hybrid electronic control unit 50 outputs signals via the output port, such as a display signal to an indicator 72 which is provided in front of a driver's seat so as to display a remaining time capable of continuing motor drive. As described above, the hybrid electronic control unit 50 is connected to the engine ECU 24, the motor ECU 40, and the battery ECU 52 via the communication port so as to send and receive various control signals and data to and from the engine ECU 24, the motor ECU 40, and the battery ECU 52.

According to the hybrid vehicle 20 of the embodiment thus configured, the operation of the engine 22, the motor MG1, and the motor MG2 is controlled such that the accelerator opening Acc corresponding to the amount of depression of the accelerator pedal 83 by the driver and the vehicle speed V are used to calculate the torque demand to be outputted to the drive shaft 32 and the power demand corresponding to the torque demand is outputted to the drive shaft 32. The operation modes for controlling the operation of the engine 22, the motor MG1, and the motor MG2 include a torque conversion operation mode where the operation of the engine 22 is controlled so as to output the power matching power demand from the engine 22 as well as the drive of the motor MG1 and the motor MG2 is controlled so that all the power outputted from the engine 22 undergoes torque conversion by the planetary gear 30, the motor MG1, and the motor MG2 and is outputted to the drive shaft 32; a charge/discharge operation mode where the operation of the engine 22 is controlled so that the power matching the sum of power demand and electric power necessary for charging and discharging the battery 46 is outputted from the engine 22 as well as the drive of the motor MG1 and the motor MG2 is controlled so that all or part of the power outputted from the engine 22 with charging and discharging of the battery 46 undergoes torque conversion by the planetary gear 30, the motor MG1, and the motor MG2 and the power demand is outputted to the drive shaft 32; and a motor operation mode where the operation is controlled so that the engine 22 stops operating, and the power matching power demand from the motor MG2 is outputted to the drive shaft 32. It should be noted that when the above described EV switch 89 is on, a motor operation mode is selected from within an allowable range of the state of charge (SOC) of the battery 46, the catalyst bed temperature θcat of the purifying device 28, and the like; and when the EV switch 89 is off, an energy-efficient operation mode is selected from other operation modes depending on the circumstances.

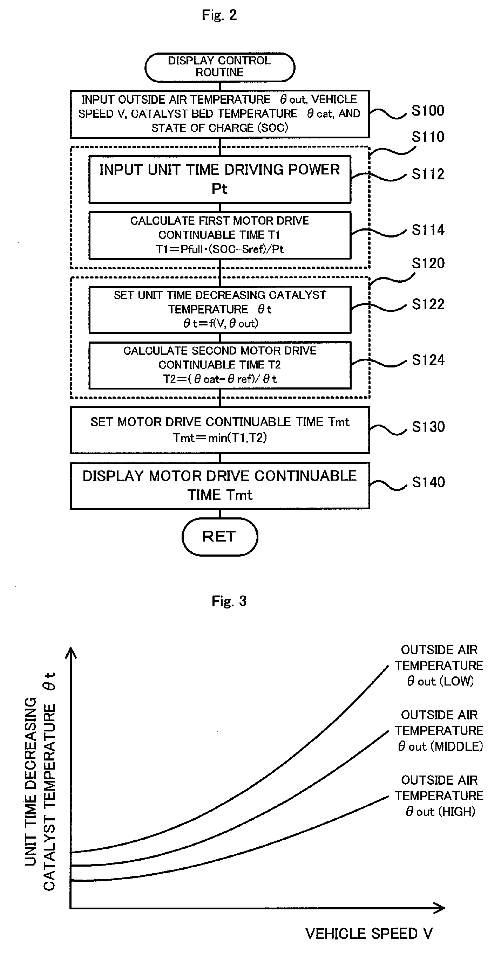

Next, the operation of the hybrid vehicle 20 of the embodiment thus configured, particularly the operation for displaying the time capable of continuing driving (motor drive) in a motor operation mode. Fig. 2 is a flowchart showing an example of a display control routine executed by the hybrid electronic control unit 50. This routine is executed repeatedly every predetermined time (e.g., every several hundred msec) in a state where the EV switch 69 is on and a motor operation mode is selected.

When the display control routine is executed, the CPU 52 of the hybrid electronic control unit 50 executes a process of inputting data necessary for control, such as the vehicle speed V from the vehicle speed sensor 67, the outside air temperature θout from the outside air temperature sensor 68, the catalyst bed temperature θcat of the purifying device 28, and the state of charge (SOC) of the battery 46 (Step S100). Here, the catalyst bed temperature θcat of the purifying device 28 detected by the catalyst temperature sensor 29 is assumed to be inputted from the engine ECU 24 through communication and the state of charge (SOC) of the battery 46 detected by the current sensor and calculated based on an integrated value of charge-discharge current is assumed to be inputted from the battery ECU 48 through communication respectively.

Subsequently, a first motor drive continuable time T1 is calculated based on the input state of charge (SOC) of the battery 46 (Step S110). In this calculation process, a unit time driving power Pt which is electric power consumed per unit time required for motor drive is inputted (Step S112); and a predetermined amount Sref, which is a state of charge (SOC) (e.g., 5% and 10%) enough to start the engine 22, is subtracted from the state of charge (SOC) of the battery 46, the difference is multiplied by the total electric power amount Pfull as a rated value of the battery 46, and the product is divided by the input unit time driving power Pt to calculate the first motor drive continuable time T1 (Step S114). Here, according to the embodiment, the unit time driving power Pt is assumed to use a value which is recalculated based on the state of charge (SOC) of the battery 46 for each motor drive as electric power which is consumed on average per unit time (e.g. , one second) during motor drive.

Next, a second motor drive continuable time T2 is calculated based on a catalyst function of the purifying device 28 (Step S120). In this calculation process, a catalyst temperature of the purifying device 28 which decreases per unit time when the engine 22 stops operating is set as a unit time decreasing catalyst temperature θt based on the inputted vehicle speed V and the outside air temperature θout (Step S122); and a predetermined temperature θref (e.g., 400°C, 450°C, etc), which is a lower limit temperature allowing the catalyst to function, is subtracted from the inputted catalyst bed temperature θcat of the purifying device 28 and the difference is divided by the set unit time decreasing catalyst temperature θt to calculate the second motor drive continuable time T2 (Step S124). Here, according to the embodiment, the unit time decreasing catalyst temperature θt is assumed to be set such that the relation among the vehicle speed V, the outside air temperature θout, and the unit time decreasing catalyst temperature θt is preliminarily obtained by experiment and is stored in the ROM 54 as the unit time decreasing catalyst temperature setting map; and when the vehicle speed V and the outside air temperature θout are given, the corresponding unit time decreasing catalyst temperature θt is derived from the stored map. Fig. 3 shows an example of a unit time decreasing catalyst temperature setting map. As shown in the figure, the unit time decreasing catalyst temperature θt tends to be set such that the higher the vehicle speed V, the higher the unit time decreasing catalyst temperature θt; and the lower the outside air temperature θout, the higher the unit time decreasing catalyst temperature θt. This is because the higher the vehicle speed V and the lower the outside air temperature θout, the larger the amount of heat discharged from the catalyst of the purifying device 28.

Then, the calculated first motor drive continuable time T1 or the calculated second motor drive continuable time T2, whichever is shorter, is set as the motor drive continuable time Tmt (Step S130); the set motor drive continuable time Tmt is displayed on the indicator 72 (Step S140); and this routine is terminated. Here, the reason for displaying shorter continuable time is that in a state where the EV switch 69 is on during motor drive, for example, while the time is being displayed based on the state of charge (SOC) of the battery 46, the engine 22 starts according to the time based on the catalyst function of the purifying device 28, which is more restrictive as the start condition. If the engine 22 starts thus earlier than the time displayed on the indicator 72, the driver may feel uncomfortable. Therefore, displaying the narrower range allowing motor drive to continue is more appropriate and an uncomfortable feeling of the driver can be reduced.

According to the hybrid vehicle 20 of the embodiment described above, when the EV switch 69 is on, the first motor drive continuable time T1 based on the state of charge (SOC) of the battery 46 and the unit time driving power Pt or the second motor drive continuable time T2 as the time until reaching the lower limit temperature θref where the catalyst of the purifying device 28 can function, whichever is shorter, is visibly displayed to the driver. Therefore, the range capable of continuing motor drive can be more appropriately displayed to the driver than the method of displaying time based simply on the state of charge (SOC) of the battery 46. As a result, in a state where the EV switch 69 is on during motor drive, this can reduce an uncomfortable feeling of the driver due to an unexpected start of the engine 22.

According to the hybrid vehicle 20 of the embodiment, the first motor drive continuable time T1 based on the state of charge (SOC) of the battery 46 or the second motor drive continuable time T2 based on the catalyst function of the purifying device 28, whichever is shorter, is displayed as the driving continuable time, but the first motor drive continuable distance D1 based on the state of charge (SOC) of the battery 46 or the second motor drive continuable distance D2 based on the catalyst function of the purifying device 28, whichever is shorter, may be displayed as the driving continuable distance. In this case, instead of the unit time driving power Pt used to calculate the first motor drive continuable time T1, a unit distance driving power Pd which is electric power consumed per unit distance required for motor drive is used to calculate a first motor drive continuable distance D1, and the second motor drive continuable time T2 is multiplied by an average vehicle speed for motor drive to calculate a second motor drive continuable distance D2, and then whichever is shorter may be displayed as the driving continuable distance.

According to the hybrid vehicle 20 of the embodiment, the predetermined temperature θref which is a lower limit temperature where the catalyst of the purifying device 28 can function is used to calculate the second motor drive continuable time T2, but the predetermined temperature θref as a temperature slightly higher than the lower limit temperature where the catalyst of the purifying device 28 can function may be used to calculate the second motor drive continuable time T2.

According to the hybrid vehicle 20 of the embodiment, the catalyst bed temperature θcat of the catalyst of the purifying device 28 is detected by the catalyst temperature sensor 29, but this may be estimated by correcting a basic temperature based on the rotation speed of the engine 22, the intake air flow, the intake air temperature, and the like during driving with the engine 22 being operated, using the elapsed time since the motor drive started, the vehicle speed V, the outside air temperature θout, and the like.

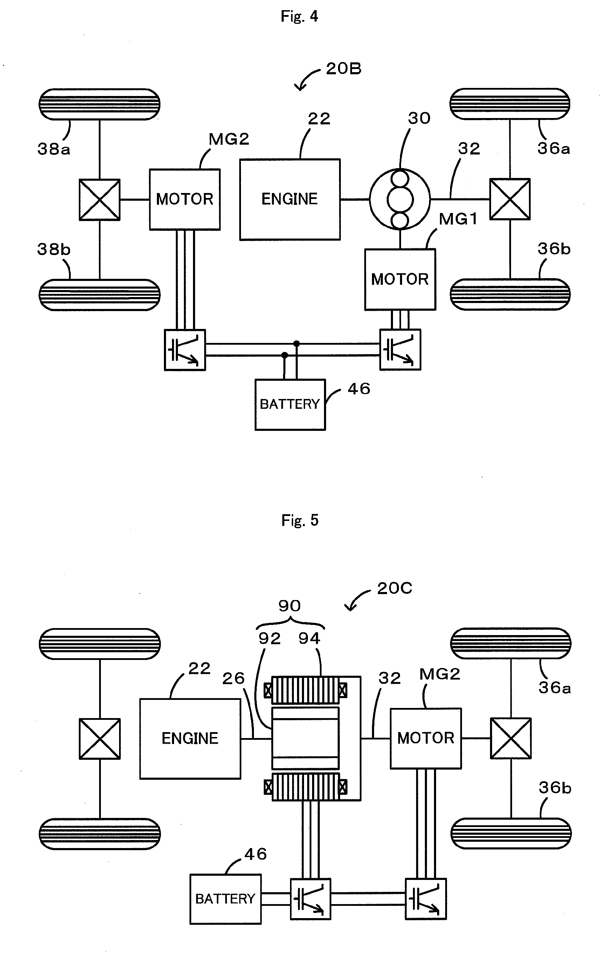

According to the hybrid vehicle 20 of the embodiment, power of the motor MG2 is outputted to the drive shaft 32, but as illustrated in the hybrid vehicle 20B of the variation of Fig. 4, power of the motor MG2 may be connected to an axle (the axle connected to the wheels 38a and 38b in Fig. 4) different from the axle (the axle to which the drive wheels 36a and 36b are connected) connected to the drive shaft 32.

According to the hybrid vehicle 20 of the embodiment, power of the engine 22 is outputted to the drive shaft 32 connected the drive wheels 36a and 36b via the planetary gear 30, but as illustrated in the hybridvehicle 20C of the variation in Fig. 5, there may be provided a pair-rotor motor 90 which has an inner rotor 92 connected to the crankshaft 26 of the engine 22 and an outer rotor 94 connected to the drive shaft 32 for outputting power to the drive wheels 36a and 36b so as to transmit part of the power of the engine 22 to the drive shaft 32 and convert the remaining power into electric power.

According to the embodiment, the hybrid vehicle 20 has been described as its application, but the embodiment may be applied to a hybrid vehicle other than an automobile such as a train, or may be applied as a motor drive continuable range displaying method for visibly displaying, to the driver, a range capable of continuing motor drive in a hybrid vehicle including an automobile and a train.

Here, the correspondence between major elements disclosed in the embodiments and the major elements disclosed in the Disclosure of the Invention will be described. Specifically, in the embodiments, the engine 22 corresponds to "internal combustion engine", the purifying device 28 having a catalyst corresponds to "exhaust gas purifying device", the motor MG2 corresponds to "motor", the battery 46 corresponds to "accumulator", the EV switch 69 corresponds to "motor drive instructing switch", and the hybrid electronic control unit 50 and the indicator 72 corresponds to "motor drive continuable range displaying module", in which the display control routine shown in Fig. 2 performs the steps S100 to S140 as follows. When the EV switch 69 is on, a predetermined amount Sref, which is a state of charge (SOC) enough to start the engine 22, is subtracted from the state of charge (SOC) of the battery 46; the difference and the unit time driving power Pt are used to calculate the first motor drive continuable time T1; a predetermined temperature θref, which is a lower limit temperature allowing the catalyst of the purifying device 28 to function, is subtracted, and the difference is divided by the unit time decreasing catalyst temperature θt set based on the vehicle speed V and the outside air temperature θout to calculate the second motor drive continuable time T2; then, the first motor drive continuable time T1 or the second motor drive continuable time T2, whichever is shorter, is set as the motor drive continuable time Tmt and is displayed on the indicator 72. It should be noted that regarding the correspondence between major elements disclosed in the embodiments and the major elements of the invention disclosed in the Disclosure of the Invention, an embodiment thereof is just an example for specifically describing the best mode for carrying out the invention disclosed in the Disclosure of the Invention, and thus the elements disclosed in the embodiments do not limit the elements of the invention disclosed in the Disclosure of the Invention. In other words, the description of the invention disclosed in the Disclosure of the Invention should be construed based on the description therein, an embodiment thereof is just a specific example of the invention disclosed in the Disclosure of the Invention.

Hereinbefore, the best mode for carrying out the invention has been described with reference to embodiments, but the present invention is not limited to the above embodiments. It will be apparent that various modifications can be made to the present invention without departing from the spirit and scope of the present invention.

### Industrial Applicability

The present invention can be used for a manufacturing industry of hybrid vehicles and the like.

## Claims

1. A hybrid vehicle driven with power from a motor and power from an internal combustion engine equipped with an exhaust gas purifying device having an exhaust gas purifying catalyst for purifying an exhaust gas, said hybrid vehicle comprising:
an accumulator that transfers electric power to and from said motor;
a motor drive instructing switch to make an instruction for a motor drive in which said hybrid vehicle is driven with only by power from said motor in a state of operation stop of said internal combustion engine; and
a motor drive continuable range displaying module that displays, to a driver in a visible manner, narrower one of a first motor drive continuable range and a second motor drive continuable range, when said instruction for said motor drive is made by said motor drive instructing switch, said first motor drive continuable range allowing said hybrid vehicle to continue said motor drive and defined in accordance with a driving state of said hybrid vehicle including at least a state of said accumulator during said motor drive, said second motor drive continuable range allowing said hybrid vehicle to continue said motor drive and defined in accordance with a state of said exhaust gas purifying catalyst.

2. A hybrid vehicle according to claim 1, wherein said first motor drive continuable range and said second motor drive continuable range are defined by either as a time allowing said hybrid vehicle to continue said motor drive or as a driving distance allowing said hybrid vehicle to continue said motor drive.

3. A hybrid vehicle according to claim 1, wherein said first motor drive continuable range is calculated from an amount of electric power dischargeable from said accumulator and a driving power per unit time or per unit distance based on said driving state of said hybrid vehicle according to a driver's driving state, and
said second motor drive continuable range is calculated from a time until reaching a temperature in the vicinity of a lower limit allowing said exhaust gas purifying catalyst to function.

4. A motor drive continuable range displaying method for displaying to a driver in a visible manner a range allowing a hybrid vehicle to continue a motor drive, said hybrid vehicle including: an internal combustion engine outputting driving power and equipped with an exhaust gas purifying device having an exhaust gas purifying catalyst for purifying an exhaust gas; a motor outputting driving power; an accumulator that transfers electric power to and from said motor; and a motor drive instructing switch to make an instruction for said motor drive in which said hybrid vehicle is driven with only by power from said motor in a state of operation stop of said internal combustion engine, said method comprising the step of:
displaying narrower one of a first motor drive continuable range and a second motor drive continuable range, when said instruction for said motor drive is made by said motor drive instructing switch, said first motor drive continuable range allowing said hybrid vehicle to continue said motor drive and defined in accordance with a driving state of said hybrid vehicle including at least a state of said accumulator during said motor drive, said second motor drive continuable range allowing said hybrid vehicle to continue said motor drive and defined in accordance with a state of said exhaust gas purifying catalyst.

5. A motor drive continuable range displaying method according to claim 4, wherein said first motor drive continuable range and said second motor drive continuable range are defined by either as a time allowing said hybrid vehicle to continue said motor drive or as a driving distance allowing said hybrid vehicle to continue said motor drive.

6. A motor drive continuable range displaying method according to claim 4, wherein said first motor drive continuable range is calculated from an amount of electric power dischargeable from said accumulator and a driving power per unit time or per unit distance based on said driving state of said hybrid vehicle according to a driver's driving state, and
said second motor drive continuable range is calculated from a time until reaching a temperature in the vicinity of a lower limit allowing said exhaust gas purifying catalyst to function.
